# EUROPÄISCHE PATENTSCHRIFT

(11) **EP 1 467 587 B1**
(45) Veröffentlichungstag und Bekanntmachung des Hinweises auf die Patenterteilung: **14.05.2008**
(21) Anmeldenummer: 04008532.6
(22) Anmeldetag: 08.04.2004
(51) Int. Cl.: H04Q 7/38

(54) **Kommunikationssystem für den Mobilfunk mit wenigstens einem in einem Gesamtgebiet befindlichen Teilnehmergebiet**
Communication system for mobile radios having at least one subscriber specific area in the coverage area
Système de communication pour radios mobiles avec au moins une zone d'abonné spécifique dans la couverture

(30) Priorität: 08.04.2003 DE 10316063
(43) Veröffentlichungstag der Anmeldung: 13.10.2004
(73) Patentinhaber: O2 (Germany) GmbH & Co. OHG, 80992 München (DE)
(72) Erfinder: Schweiger, Tobias, 80805 München (DE); Macarro, Agustin, 80469 München (DE); Waite, Gary, Faringdon, Oxfordshire SN7 8FF (GB)
(74) Vertreter: Herrmann, Uwe

(56) Entgegenhaltungen:
- WO-A-00/56104
- WO-A-96/39000
- WO-A-98/39940
- DE-C- 19 731 461

## Beschreibung

Die vorliegende Erfindung betrifft ein Kommunikationssystem für den Mobilfunk mit mobilen Endgeräten sowie mit in die mobilen Endgeräte einsetzbaren Modulen, wobei innerhalb des durch das Kommunikationssystems abgedeckten Gesamtgebietes wenigstens ein Teilnehmergebiet festgelegt ist, innerhalb dessen die Kommunikation von und/oder zu den mobilen Endgeräten unter besonderen Bedingungen erfolgt, und wobei Mittel vorgesehen sind, durch die feststellbar ist, ob sich das mobile Endgerät innerhalb des Teilnehmergebietes befindet. Die vorliegende Erfindung betrifft ferner ein Verfahren zum Betreiben eines Kommunikationssystems für den Mobilfunk mit mobilen Endgeräten sowie mit in die mobilen Endgeräte einsetzbaren Modulen, wobei innerhalb des durch das Kommunikationssystems abgedeckten Gesamtgebietes wenigstens ein Teilnehmergebiet festgelegt ist, innerhalb dessen die Kommunikation von und/oder zu den mobilen Endgeräten unter besonderen Bedingungen erfolgt, und wobei eine Ermittlung erfolgt, ob sich das mobile Endgerät in dem Teilnehmergebiet befindet.

Ein derartiges Kommunikationssystem und Verfahren ist aus der EP 1 159 842 bekannt. Das bekannte Kommunikationssystem deckt ein in Location Areas unterteiltes Gesamtgebiet ab, innerhalb dessen die Kommunikation von und zu den mobilen Endgeräten möglich ist. Das Gesamtgebiet ist in Location Areas unterteilt, die ihrerseits Funkzellen aufweisen, die von einer Sende- und Empfangsstation des Kommunikationsystems bedient werden. Die in dem Gesamtgebiet betreibbaren mobilen Endgeräte weisen in diese einführbare SIM-Module auf, die eine eindeutige l-dentifizierung des damit versehenen mobilen Endgerätes innerhalb des Kommunikationssystems ermöglichen. Auf den SIM-Modulen sind ferner Koordinaten abgelegt, die aus einem Ortspunkt mit den Koordinaten Xh, Yh und einem Radius Rh bestehen, der einen Kreis um den Ortspunkt festlegt. Die Sende- und Empfangsstationen des Kommunikationssystems übermitteln in regelmäßigen Abständen Kennungen der zugehörigen Funkzelle sowie für die Funkzelle charakteristische Koordinaten, die seitens der in dem Bereich der Sende- und Empfangsstationen befindlichen mobilen Endgeräte empfangbar sind. Ein mit einer entsprechenden Applikation ausgerüstetes mobiles Endgerät prüft, ob die empfangenen Koordinaten der Funkzelle in den Kreis fallen, dessen Koordinaten Xh Yh, Rh auf dem SIM-Modul in einem Speicher abgelegt sind. Ist dies der Fall, d.h. liegen die Koordinaten der Funkzelle innerhalb des Kreises, wird dem Benutzer im Display seines mobilen Endgerätes angezeigt, dass sich sein mobiles Endgerät in dem Bereich einer Sende- und Empfangsstation befindet, das innerhalb des vorgenannten Kreises liegt. Hintergrund für die Festlegung derartiger Teilnehmergebiete ist die Möglichkeit, dem Benutzer besondere Konditionen, insbesondere vergünstigte Preise bereitzustellen, sofern sich sein mobiles Endgerät in einem Teilnehmergebiet befindet.

Die Prüfung, ob sich das mobile Endgerät in einem Teilnehmergebiet befindet, erfolgt seitens des mobilen Endgerätes, das mit einer entsprechenden Software-Applikation ausgerüstet ist. Die Software greift auf die auf dem SIM-Modul gespeicherten Daten Xh, Yh, Rh zu und prüft anhand der netzseitig empfangenen Daten, ob sich das mobile Endgerät in dem Teilnehmergebiet befindet. Sofern dies der Fall ist, wird dies dem Benutzer am Display des mobilen Endgerätes angezeigt.

An dem vorbekannten Kommunikationssystem ist nachteilig, dass die genannte Prüfung der Zughörigkeit zu einem Teilnehmergebiet mittels einer auf dem mobilen Endgerät befindlichen Software-Applikation erfolgt. Dementsprechend werden speziell ausgerüstete mobile Endgeräte benötigt. Mobile Endgeräte, die über eine derartige Applikation nicht verfügen, können zwar unter Umständen die Kennungen und Koordinaten der Location Areas und Funkzellen empfangen, sind jedoch nicht in der Lage, zu ermitteln, ob eine Zughörigkeit des Aufenthaltsortes des mobilen Endgerätes zu einem Teilnehmergebiet vorliegt oder nicht. Für den Betreiber eines derartigen Kommunikationssystems ist daher nachteilig, dass er dem Kunden mobile Endgeräte, die über die genannte Applikation nicht verfügen, nicht anbieten kann, sofern der Kunde den vorgenannten Service wünscht. Ein weiterer Nachteil ergibt sich aus den höheren Kosten von mobilen Endgeräten, die über die erforderliche Applikation verfügen. Ferner offenbart die Druckschrift WO 00/56104 ein Kommunikationssystem für den Mobilfunk, bei den durch das mobile Endgerät geprüft wird, ob die aktuelle Funkzelle innerhalb eines gesonderten Teilnehmergebietes liegt oder nicht.

Es ist daher die Aufgabe der vorliegenden Erfindung, ein Kommunikationssystem und ein Verfahren zum Betreiben eines Kommunikationssystems zu schaffen, in dem die Prüfung der Zugehörigkeit des Aufenthaltsortes des mobilen Endgerätes zu einem Teilnehmergebiet durchführbar ist und das den Einsatz von mobilen Endgeräten zulässt, die über keine entsprechende Funktionalität verfügen.

Diese Aufgabe wird durch ein Kommunikationssystem mit den Merkmalen des Patentanspruchs 1 sowie durch ein Verfahren mit den Merkmalen des Patentanspruchs 18 gelöst.

Erfindungsgemäß sind die Mittel, durch die feststellbar ist, ob sich das mobile Endgerät innerhalb des Teilnehmergebietes befindet, auf dem Modul oder in einer Ermittlungseinheit angeordnet, auf mittels Fernabfrage zugreifbar ist. In bevorzugter Ausgestaltung ist das Modul das SIM-Modul. Da die Überprüfung, ob sich das mobile Endgerät in einem Teilnehmergebiet befindet, nicht im mobilen Endgerät selbst, sondern auf dem Modul oder in einer Ermittlungseinheit erfolgt, die nicht in dem mobilen Endgerät, sondern als über Fernabfrage, vorzugsweise über das Kommunikationssystem adressierbare Komponente angeordnet ist, können mobile Endgeräte eingesetzt werden, die keine spezielle Funktionalität zur Durchführung des Prüfung aufweisen müssen, ob sich das mobile Endgerät in einem Teilnehmergebiet befindet oder nicht. Daraus ergibt sich der Vorteil, dass die mobilen Endgeräte aufgrund des Fehlens einer speziellen Applikation preisgünstiger sind. Für den Betreiber des Kommunikationssystems ergibt sich der Vorteil, dass dem Kunden eine größere Anzahl an unterschiedlichen mobilen Endgeräten angeboten werden kann, da es auf eine spezielle Ausgestaltung der mobilen Endgeräte nicht ankommt.

Die Ermittlungseinheit kann derart ausgeführt sein, dass an das mobile Endgerät die Information übermittelbar ist, ob sich das mobile Endgerät in einem Teilnehmergebiet befindet oder nicht. Die Ermittlung, ob dies der Fall ist, erfolgt in dieser Ausgestaltung der Erfindung in der Ermittlungseinheit. Diese erhält vorzugsweise von dem Modul die ldentitätsdaten der Location Areas oder Funkzellen, in denen sich das mobile Endgerät befindet und nimmt sodann die entsprechende Auswertung vor. Das Ergebnis wird mittels des Kommunikationsnetzwerkes an das mobile Endgerät bzw. das Modul übermittelt.

In bevorzugter Ausgestaltung der Erfindung sind Mittel vorgesehen, durch die dem Benutzer mitgeteilt werden kann, ob sich das mobile Endgerät innerhalb des Teilnehmergebietes befindet. Bei diesen Mitteln kann es sich beispielsweise um akustische oder optische oder sonstige Mittel des mobilen Endgerätes handeln.

Vorteilhafte Ausgestaltungen der Erfindung sind Gegenstand der Unteransprüche.

Üblicherweise sind in dem von dem Kommunikationssystem abgedeckten Gesamtgebiet Location Areas angeordnet, in denen sich eine oder mehrere Funkzellen befinden. Die Teilnehmergebiete können eine oder mehrere Location Areas ganz oder teilweise umfassen oder auch nur einen Teil einer Location Area abdecken. Innerhalb der Location Areas befinden sich Funkzellen, die im allgemeinen von einer Sende- und Empfangsstation des Kommunikationssystems bedient werden. Die Teilnehmergebiet können sehr unterschiedliche Größen aufweisen. Ein als Cityzone bezeichnetes Teilnehmergebiet, das den Bereich einer Stadt abdeckt, kann beispielsweise 15 Location Areas umfassen, in denen sich mehrere Hundert Funkzellen befinden.

Die Location Areas und/oder die Funkzellen können diese charakterisierende Identitätsdaten aufweisen. Sowohl die Location Areas als auch die Funkzellen weisen Kennungen auf, die im folgenden mit LAC (Location Area Code) als Kennung für die Location Area und als Cl (Cell ld) als Kennung für die Funkzelle bezeichnet werden. Eine Funkzelle ist somit eindeutig identifizierbar, wenn angegeben wird, in welcher Location Area sich die Funkzelle befindet und welche Kennung die Funkzelle innerhalb der Location Area aufweist. Die Kennung LAC/Cl stellt somit eine die Funkzelle eindeutig definierende Kennzeichnung dar.

Außer den vorgenannten Kennungen ist eine Identifikation einer Location Area oder Funkzelle auch mittels Koordinaten möglich, die beispielsweise den Abszissenwert X und den Ordinatenwert Y eines Koordinatensystems umfassen.

In dem Kommunikationssystem können Mittel vorgesehen sein, mittels derer die ldentitätsdaten der Location Areas und/oder der Funkzellen an die mobilen Endgeräte übermittelt werden. Vorzugsweise übermitteln die Sende- und Empfangsstationen des Kommunikationssystems an die mobilen Endgeräte die Kennung LAC/Cl sowie die Koordinaten X,Y der Funkzellen. Grundsätzlich wäre auch die Übermittlung von Koordinaten von Location Areas denkbar, sofern diese mit Koordinaten eindeutig identifizierbar sind.

In den mobilen Endgeräten ist in bevorzugter Ausgestaltung der Erfindung eine Schnittstelle vorgesehen, mittels derer die ldentitätsdaten an das Modul übermittelt werden. Sobald das mobile Endgerät die ldentitätsdaten der Location Area oder Funkzelle empfangen hat, in deren Bereich sich das mobile Endgerät befindet, werden diese Daten an das Modul weitergegeben.

In dem Modul und/oder in der Ermittlungseinheit des Kommunikationssystems können Mittel vorgesehen sein, mittels derer die ldentitätsdaten der Location Area oder Funkzelle, in der sich das mobile Endgerät befindet, mit das Teilnehmergebiet charakterisierenden Daten verglichen werden. Diese Prüfung kann dementsprechend in dem Modul selbst und/oder auch in einer Ermittlungseinheit vorgenommen werden, die vorzugsweise eine über das Kommunikationssystem erreichbare Netzwerkkomponente darstellt und die in bevorzugter Ausgestaltung der Erfindung auf Veranlassung des Moduls mit einer entsprechenden Anfrage adressiert wird.

Die das Teilnehmergebiet charakterisierenden Daten können Kennungen oder Koordinaten der in dem Teilnehmergebiet befindlichen Location Areas und/oder Funkzellen umfassen.

Die das Teilnehmergebiet charakterisierenden Daten sind vorzugsweise in dem Modul und/oder in der Ermittlungseinheit abgelegt.

Die Mittel, durch die feststellbar ist, ob sich das mobile Endgerät innerhalb des Teilnehmergebietes befindet, können derart ausgeführt sind, dass durch diese bestimmbar ist, ob die Koordinaten einer Funkzelle oder einer Location Area des Kommunikationssystems in einem Bereich liegen, der durch einen Ortspunkt und den Radius eines den Ortspunkt als Mittelpunkt umgebenden Kreises festgelegt ist. Sofern die Koordinaten einer Funkzelle innerhalb dieses Kreises liegen, dessen Koordinaten auf dem Modul oder in der Ermittlungseinheit abgespeichert sein können, kann dies dem Benutzer angezeigt werden. Das Teilnehmergebiet wird in diesem Fall durch die Summe der Funkzellen gebildet, deren Koordinaten innerhalb des Kreises liegen. Dabei kann die Kreislinie selbst je nach Bedarf mit eingeschlossen sein, d.h. Koordinaten der Funkzelle, die auf der Kreislinie liegen, werden als noch zur Kreisfläche gehörig gewertet. Selbstverständlich ist es ebenso möglich, die Kreislinie selbst auszuschließen.

Die Koordinaten der Funkzellen können durch die Koordinaten der Sende- und Empfangseinheit der Funkzelle gebildet werden.

Die beschriebene Verfahrensweise setzt voraus, dass die Koordinaten der Location Area oder Funkzelle gesendet werden. Werden netzseitig die Koordinaten jedoch nicht übermittelt oder von dem mobilen Endgerät nicht empfangen, sollte dennoch feststellbar sein, ob sich das mobile Endgerät innerhalb eines Teilnehmergebietes befindet oder nicht. Dazu kann beispielsweise vorgesehen sein, dass die Kennungen der Location Areas oder Funkzellen derart bezeichnet sind, dass sie in eindeutiger Beziehung zu den Koordinaten der Location Area oder der Funkzelle stehen, so dass aus den Kennungen die Koordinaten ermittelbar sind. Das Modul und/oder die Ermittlungseinheit berechnen aus der empfangenen Kennung der Funkzelle die Koordinaten der Funkzelle und legen diese der weiteren oben beschriebenen Ermittlung der Zugehörigkeit zu einem Teilnehmergebiet zugrunde. Dazu ist eine Kodierung der Location Areas bzw. Funkzellen erforderlich, die eine Berechnung der Koordinaten zulässt.

In weiterer Ausgestaltung der vorliegenden Erfindung ist vorgesehen, dass das Modul und/oder die Ermittlungseinheit Mittel aufweist, durch die bestimmbar ist, ob die Kennung der Location Area und/oder Funkzelle, in der sich das mobile Endgerät befindet, mit einer vorgegebenen Kennung der Location Area und/oder Funkzelle des Teilnehmergebietes übereinstimmt. Dabei ist in bevorzugter Ausgestaltung vorgesehen, dass die vorgegebene Kennung in dem Modul oder in der Ermittlungseinheit abgespeichert ist. Auch diese Ausgestaltung der Erfindung setzt nicht zwingend die Erfassung der Koordinaten der Funkzelle voraus. Durch einen Vergleich der Kennung der Location Area und/oder Funkzelle mit vorgegebenen Kennungen der Location Areas und/oder Funkzellen, die in einem Teilnehmergebiet liegen, kann auch ohne Kenntnis der Koordinaten der Funkzelle bestimmt werden, ob sich das mobile Endgerät in einem Teilnehmergebiet befindet.

Um den benötigten Speicherplatz zu reduzieren kann in weiterer Ausgestaltung der Erfindung vorgesehen sein, dass die in dem Modul oder in der Ermittlungseinheit abgelegten Kennungen zumindest teilweise in einer den Speicherbedarf verringernden Form abgespeichert sind. Dies kann insbesondere dann sinnvoll oder erforderlich sein, wenn ein Teilnehmergebiet die Größe einer Großstadt aufweist und dementsprechend mehrere Hundert Kennungen von darin angeordneten Funkzellen zu speichern wären. Um den Speicherbedarf zu reduzieren, was insbesondere dann anzustreben ist, wenn die Speicherung auf dem Modul erfolgt, kann vorgesehen sein, eine Datenkompression vorzunehmen und die komprimierten Daten auf dem Modul abzulegen. Entsprechendes ist auch in den Fällen möglich, in denen die Speicherung nicht auf dem Modul erfolgt. Insbesondere kann vorgesehen sein, dass die Daten in einer Weise gespeichert werden, die einen geringeren Speicherbedarf aufweist, und die Rückschlüsse auf nicht gespeicherte Daten zulässt. Beispielsweise können anstelle sämtlicher Kennungen eines Bereiches von Kennungen nur die Bereichsgrenzen gespeichert werden, wodurch sich der Speicherplatz wesentlich verringert. Aus den Bereichsgrenzen ist die Information entnehmbar, dass auch die nicht gespeicherten Kennungen, die sich zwischen oder außerhalb der Bereichsgrenzen befinden, zu einem Teilnehmergebiet gehören oder außerhalb liegen.

In weiterer Ausgestaltung der Erfindung ist vorgesehen, dass die Ermittlungseinheit derart ausgeführt ist, dass an das mobile Endgerät die Information übermittelbar ist, ob sich das mobile Endgerät in einem Teilnehmergebiet befindet. Das mobile Endgerät kann dem Benutzer sodann vorzugsweise mittels Anzeige auf dem Display oder akustisch oder auf sonstige Art und Weise kenntlich machen, dass er sich mit seinem mobilen Endgerät in einem Teilnehmergebiet befindet.

Sofern mehr als ein Teilnehmergebiet vorgesehen ist, kann vorgesehen sein, dass die von dem Modul an das mobile Endgerät übermittelte Information beinhaltet, in welchem der mehreren Teilnehmergebiete sich der Benutzer aufhält. Zur Übermittlung der Information ist zwischen mobilem Endgerät und dem Modul eine Schnittstelle vorgesehen. Diese kann der Schnittstelle entsprechen, über die das Modul von dem mobilen Endgerät die Kennungen und/oder Koordinaten der Location Areas und/oder Funkzellen erhält.

Die vorliegende Erfindung betrifft ferner ein Verfahren zum Betreiben eines Kommunikationssystems für den Mobilfunk mit mobilen Endgeräten sowie mit in die mobilen Endgeräte einsetzbaren Modulen, wobei innerhalb des durch das Kommunikationssystems abgedeckten Gesamtgebietes wenigstens ein Teilnehmergebiet festgelegt ist, innerhalb dessen die Kommunikation von und/oder zu den mobilen Endgeräten unter besonderen Bedingungen erfolgt, und wobei eine Ermittlung erfolgt, ob sich das mobile Endgerät in dem Teilnehmergebiet befindet. Erfindungsgemäß erfolgt die Bestimmung, ob sich das mobile Endgerät in einem Teilnehmergebiet befindet auf dem Modul oder in einer Ermittlungseinheit, auf die per Fernabfrage, vorzugsweise auf Veranlassung durch das Modul zugegriffen wird.

Vorteilhafte Ausgestaltungen des erfindungsgemäßen Verfahren sind Gegenstand der Unteransprüche.

In einer Ausgestaltung des Verfahrens kann vorgesehen sein, dass mittels des Moduls und/oder der Erfassungseinheit die Prüfung erfolgt, ob die Koordinaten einer Location Area und/oder Funkzelle in einem Bereich liegen, der durch einen Ortspunkt und den Radius eines den Ortspunkt als Mittelpunkt umgebenden Kreises festgelegt ist.

In einer Ausgestaltung des erfindungsgemäßen Verfahrens ist vorgesehen, dass mittels des Moduls und/oder der Erfassungseinheit eine Prüfung erfolgt, ob die Kennung einer Location Area oder Funkzelle mit einer vorgegebenen Kennung einer Location Area oder Funkzelle übereinstimmt.

In weiterer Ausgestaltung des erfindungsgemäßen Verfahrens ist vorgesehen, dass die mittels des Moduls und/oder der Erfassungseinheit erfolgende Prüfung, ob die Kennung einer Location Area oder Funkzelle mit einer vorgegebenen Kennung einer Location Area oder Funkzelle übereinstimmt, vor der mittels des Moduls und/oder der Erfassungseinheit erfolgenden Prüfung erfolgt, ob die Koordinaten einer Location Area und/oder Funkzelle in einem Bereich liegen, der durch einen Ortspunkt und den Radius eines den Ortspunkt als Mittelpunkt umgebenden Kreises festgelegt ist.

Der Ortspunkt sowie der Radius des Bereiches gemäß Anspruch 19 und/oder die vorgegebenen Kennungen gemäß Anspruch 19 können grundsätzlich beispielsweise in dem Modul und/oder in der Ermittlungseinheit abgelegt sein.

Es kann vorgesehen sein, dass die vorgegebenen Kennungen zumindest teilweise in einer den Speicherbedarf verringernden Weise in dem Modul und/oder in der Ermittlungseinheit abgelegt sind.

In weiterer Ausgestaltung der Erfindung ist vorgesehen, dass anhand der Kennung der Location Areas und/oder Funkzellen deren Koordinaten ermittelt werden und diese Koordinaten dem Verfahren gemäß Anspruch 19 zugrundegelegt werden.

Die Kennung der Location Area und/oder der Funkzelle und/oder deren Koordinaten kann von einer Sende- und Empfangsstation an das mobile Endgerät und von diesem an das Modul weitergeleitet werden.

Weiterhin kann vorgesehen sein, dass die von dem mobilen Endgerät an das Modul weitergeleiteten Daten von diesem an die Ermittlungseinheit übermittelt werden und dass die Ermittlungseinheit nach Prüfung, ob sich das mobile Endgerät in einem Teilnehmergebiet befindet, das Ergebnis an das mobile Endgerät und dieses an das Modul weiterleitet.

In bevorzugter Ausgestaltung der Erfindung kann das erfindungsgemäße Verfahren sowie dessen Ausgestaltungen mittels des Kommunikationssystems nach einem der Ansprüche 1 bis 17 durchgeführt werden.

Weitere Einzelheiten und Vorteile der vorliegenden Erfindung werden anhand des in der Zeichnung dargestellten Ausführungsbeispiels näher erläutert:

Es zeigen:
Fig. 1 : Schematischer Aufbau des erfindungsgemäßen Kommunikationssystems in einer ersten Ausführungsform mit auf dem SIM-Modul gespeicherter Applikation zur Bestimmung der Zugehörigkeit zu einem Teilnehmergebiet,
Fig. 2: Verfahrensablauf zur Bestimmung und Speicherung von Koordinaten auf dem SIM-Modul,
Fig. 3: Schematischer Aufbau des erfindungsgemäßen Kommunikationssystems in einer weiteren Ausführungsform mit auf einer Ermittlungseinheit gespeicherter Applikation zur Bestimmung der Zugehörigkeit zu einem Teilnehmergebiet,
Fig. 4: Schematische Darstellung von Location Areas und Funkzellen zur Erläuterung des Zugriffs auf die Ermittlungseinheit,
Fig.5: Verfahrensablauf zur Bestimmung und Speicherung eines Bereiches von Kennungen von Location Areas und/oder Funkzellen auf dem SIM-Modul,
Fig. 6: Schematischer Aufbau des erfindungsgemäßen Kommunikationssystems in einer weiteren Ausführungsform mit auf dem SIM-Modul zu zwei Teilnehmergebieten gespeicherten Kennungen der Location Areas und Funkzellen.
Fig. 7: Verfahrensablauf zur Bestimmung und Speicherung von Kennungen von Location Areas und Funkzellen auf dem SIM-Modul,
Fig. 8: Schematischer Aufbau des erfindungsgemäßen Kommunikationssystems in einer weiteren Ausführungsform mit auf dem SIM-Modul gespeicherter Applikation zur Bestimmung der Zugehörigkeit zu einem Teilnehmergebiet sowie mit einer Applikation zur Ermittlung von Koordinaten aus Kennungen der Location Areas und/oder Funkzellen und
Fig. 9: Verfahrensablauf zur Bestimmung und Speicherung von Koordinaten auf dem SIM-Modul

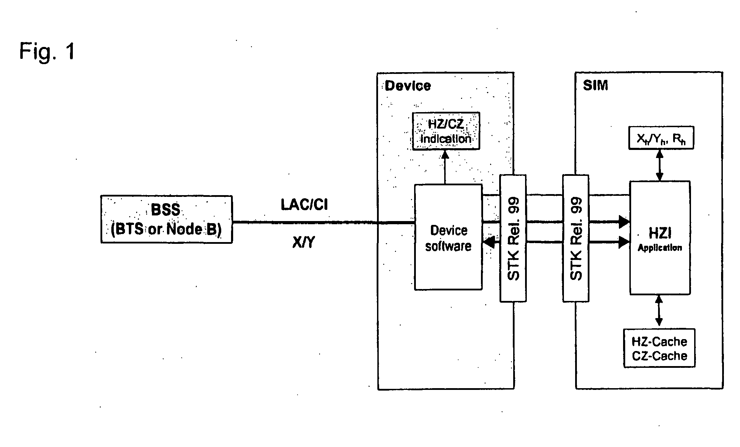

Fig. 1 zeigt in schematischer Darstellung das mobile Endgerät (Device) sowie ein in diesem befindliches SIM-Modul (SIM). Das SIM-Modul wird dem Benutzer bei Freischaltung seines Mobilfunkanschlusses übergeben und sodann in das mobile Endgerät eingesetzt. Über eine Sende- und Empfangseinheit (BSS) empfängt das mobile Endgerät Kennungen (LAC/Cl) sowie Koordinaten (X,Y) der Funkzelle, in der sich das mobile Endgerät befindet. Die Koordinaten der Funkzelle sind für die geographische Lage der Funkzelle charakteristisch und können, müssen jedoch nicht dem Standort der Sende- und Empfangseinheit entsprechen, die die Funkzelle bedient. Die Koordinaten der Funkzelle hängen von dem durch die Funkzelle abgedeckten Bereich ab und sind für jede Funkzelle eindeutig. Die Kennungen bestehen aus der Kennung der Location Area (LAC = Location Area Code) sowie der Funkzelle (Cl = Cell ld). Die Kennung LAC/Cl kennzeichnet dementsprechend die Location Area sowie die darin befindliche Funkzelle innerhalb des durch das Kommunikationssystems abgedeckten Gesamtgebietes ebenfalls eindeutig.

Das mobile Endgerät empfängt die seitens der Sende- und Empfangseinheit gesendeten Daten und gibt diese an das SIM-Modul weiter. Diese Übergabe erfolgt über eine Standardschnittstelle (STK Rel. 99) zwischen mobilem Endgerät und SIM-Modul.

Auf dem SIM-Modul sind Koordinaten eines kreisförmigen Gebietes abgespeichert, die aus dem Mittelpunkt (Xh, Yh) des Kreises sowie aus dessen Radius (Rh) bestehen. Je nach Anzahl der Teilnehmergebiete können mehrere Sätze dieser Koordinaten abgespeichert sein. Beispielsweise können die für ein erstes Teilnehmergebiet (Homezone) sowie die für ein zweites, größeres Teilnehmergebiet (Cityzone) charakteristischen Koordinaten gespeichert sein. Auf dem SIM-Modul sind ferner Kennungen von Location Areas und Funkzellen gespeichert, die innerhalb des ersten Teilnehmergebietes (Homezone) und innerhalb des zweiten Teilnehmergebietes (Cityzone) liegen. Die zugehörigen Speicher sind in Fig. 1 mit HZ-Cache und CZ-Cache bezeichnet.

Nach Erhalt der Kennungen prüft eine entsprechende Software-Applikation auf dem SIM-Modul, ob die empfangenen Kennungen der Location Areas und/oder Funkzellen mit den abgespeicherten Kennungen übereinstimmen. Ist dies der Fall wird, von dem SIM-Modul an das mobile Endgerät ein Steuersignal übergeben, so dass letzeres eine Anzeige erzeugt, dass sich das mobile Endgerät innerhalb eines Teilnehmergebietes befindet. Bei Location Areas, die vollständig innerhalb eines Teilnehmergebietes liegen, kann vorgesehen sein, dass nur die Kennungen der Location Areas LAC gespeichert sind, da in diesen Fällen nur zu prüfen ist, ob die empfangene Kennung LAC mit einer abgespeicherten Kennung LAC übereinstimmt. Ist dies der Fall, steht fest, dass sich das mobile Endgerät innerhalb eines Teilnehmergebietes befindet. Bei kleineren Teilnehmergebieten wird es im allgemeinen erforderlich sein, die eine Funkzelle eindeutig kennzeichnende Kennung LAC/Cl heranzuziehen und mit einem gespeicherten Wert zu vergleichen.

Die Speicher HZ-Cache und CZ-Cache können bereits mit Freischaltung des Mobilfunkanschlusses mit entsprechenden Koordinaten oder auch erst während des Betriebes als Ergebnis der nachstehenden Auswertung der Koordinaten beschrieben werden.

In Anschluß an die vorgenannte Prüfung ermittelt das SIM-Modul, ob die empfangenen Koordinaten X, Y der Location Area oder Funkzelle in einem kreisförmigen Bereich liegen, dessen Koordinaten Xh, Yh, Rh auf dem SIM-Modul gespeichert sind. Dazu wird mit Hilfe des Satzes von Pythagoras die Entfernung der Koordinaten X, Y der Funkzelle von dem Kreismittelpunkt Xh, Yh berechnet und anschließend ermittelt, ob diese größer, gleich oder kleiner als der Radius Rh des vorgenannten Kreises ist. Dazu werden die Quadrate der Beträge von X-Xh und Y-Yh addiert und das Ergebnis der Addition (D²) mit dem Quadrat des Radius Rh verglichen. Ist D² größer als Rh² liegen die Koordinaten der Location Area oder Funkzelle außerhalb des Teilnehmergebietes. Ist dies nicht der Fall, befindet sich also das mobile Endgerät innerhalb des entsprechenden Teilnehmergebietes, wird dieses Ergebnis von dem SIM-Modul an das mobile Endgerät übermittelt und in dessen Display sodann ein entsprechendes Symbol oder Anzeige erzeugt (HZ/CZ indication).

Der Grund für den vorzugsweise durchgeführten Vergleich der Werte D² und Rh² anstelle von D und Rh ist darin zu sehen, dass auf diese Weise verhindert wird, dass von dem Ergebnis D² der obigen Addition noch die Wurzel zu ziehen ist, wodurch Rechenleistung eingespart wird. In einer derartigen Ausgestaltung wird dementsprechend der Wert Rh² auf dem SIM-Modul abgespeichert.

Selbstverständlich ist es ebenfalls möglich, den Wert Rh auf dem SIM-Modul zu speichern.

Wird bei dieser Berechnung festgestellt, dass die Koordinaten einer Location Area oder Funkzelle außerhalb des vorgenannten kreisförmigen Bereiches liegen, deren Kennung jedoch als zu dem Teilnehmergebiet gehörig in dem SIM-Modul gespeichert ist, wird die zuvor erzeugte Anzeige im Display wieder entfernt. Ferner kann vorgesehen sein, dass diese Kennung aus dem Speicher des SIM-Moduls entfernt wird. Wird bei der Berechnung festgestellt, dass die Koordinaten einer Location A-rea oder Funkzelle auf oder innerhalb des kreisförmigen Bereiches liegen, deren Kennung jedoch nicht als zu dem Teilnehmergebiet in dem SIM-Modul gespeichert ist, kann vorgesehen sein, dass nach erfolgter Berechnung eine entsprechende Anzeige im Display des mobilen Endgerätes erzeugt und die Kennung der Location Area oder Funkzelle im SIM-Modul gespeichert wird.

Das oben beschriebene Verfahren kann nicht nur für eine, sondern auch für mehrere Teilnehmergebiete durchgeführt werden. Entsprechend dem Ergebnis der Berechnung kann dem Benutzer dann nicht nur angezeigt werden, dass sich sein mobiles Endgerät in einem Teilnehmergebiet befindet, sondern auch in welchem.

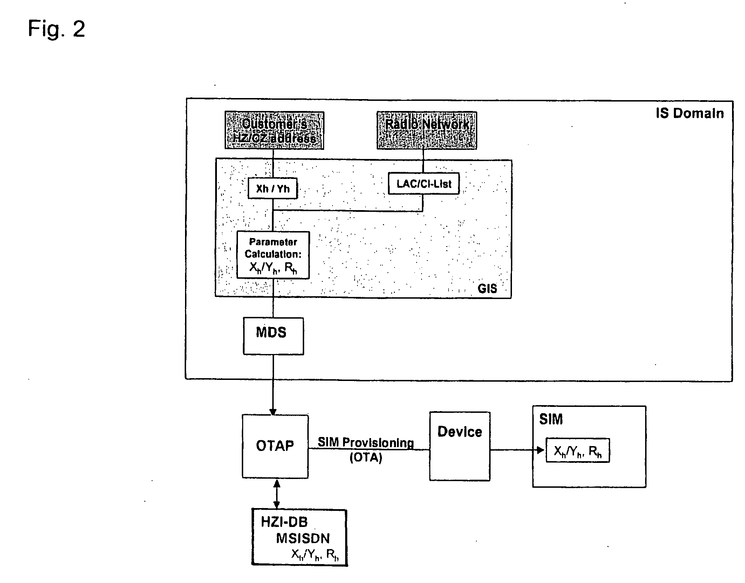

Die Bereitstellung der Koordinaten Xh, Yh und Rh auf dem SIM-Modul erfolgt gemäß Fig. 2. Bei der Freischaltung eines Mobilfunkzugangs gibt der Kunde seine Adresse an und gibt an, welches Teilnehmergebiet (Homezone HZ, Cityzone CZ oder andere) oder ob mehrere Teilnehmergebiete aktiviert werden sollen. Aufgrund dieser Information erfolgt mit Hilfe der Kennungen der Location Areas und/oder Funkzellen (LAC/Cl-List) die Ermittlung des Radius Rh. Die einen Kreis um den Ortspunkt Xh, Yh definierenden Daten Xh, Yh und Rh werden sodann per Funksignal, beispielsweise per SMS, über die Luftschnittstelle OTAP (Over The Air Platform) an das mobile Endgerät und von diesem auf das SIM-Modul übertragen, in dem sie abgespeichert werden.

Wie aus Fig. 1 ersichtlich, bedarf es seitens des mobilen Endgerätes keinerlei spezieller Applikationen, um den vorgenannten Service bereitstellen zu können. Einzige Voraussetzung ist das Vorhandensein einer Schnittstelle, die die benötigte Kommunikation zwischen SIM-Modul und mobilem Endgerät ermöglicht.

Das in Fig. 1 gezeigte Kommunikationssystem setzt voraus, dass die Koordinaten X, Y der Location Area oder Funkzelle an das mobile Endgerät und von diesem an das SIM-Modul übermittelt werden, damit auf Letzterem geprüft werden kann, ob diese auf, innerhalb oder außerhalb eines vorgegebenen Gebietes liegen.

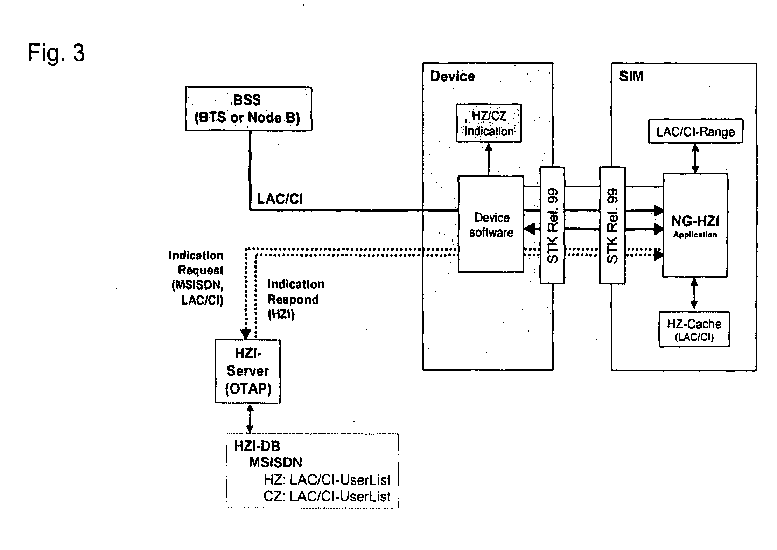

Die in Fig. 3 gezeigte weitere Ausführungsform der vorliegenden Erfindung setzt die Übermittlung der Koordinaten der Location Area und Funkzellen an das mobile Endgerät nicht zwingend voraus. Von den Sende- und Empfangseinheiten BSS werden, wie aus Fig. 3 ersichtlich, nicht die Koordinaten der Funkzelle, sondern nur die Kennung LAC der Location Area sowie die Kennung Cl der Funkzelle, in der sich das mobile Endgerät befindet, an dieses übermittelt. Die Kennungen werden sodann mittels der Schnittstelle an das SIM-Modul übergeben. Auf dem SIM-Modul befindet sich ein Speicher (HZ-Cache) mit Kennungen LAC/Cl der Funkzellen, die sich in einem Teilnehmergebiet, im vorliegenden Beispiel in der Homezone (HZ) befinden.

Seitens des SIM-Moduls erfolgt eine Abfrage in einem Speicher, in dem Kennungen (LAC/Cl-Range) von Location Areas und/oder Funkzellen abgelegt sind. Befindet sich die empfangene Kennung nicht bei den gespeicherten Kennungen, wird kein Steuersignal seitens des SIM-Moduls zur Anzeige der Zugehörigkeit zu einem Teilnehmergebiet an das mobile Endgerät abgegeben und das Verfahren beendet. Befindet sich die empfangene Kennung jedoch in dem Bereich der gespeicherten Kennungen, erfolgt die Prüfung, ob die Kennung in dem Speicher HZ-Cache abgelegt ist. Ist dies der Fall, wird eine Anzeige in dem Display des mobilen Endgerätes generiert, die verdeutlicht, dass sich dieses in einem Teilnehmergebiet befindet. Andernfalls erfolgt unter Angabe der MSISDN eine Anfrage an einen Server (HZI-Server), der durch Abfrage einer Datenbank (HZI-DB) prüft, ob die an diesen übermittelte Kennung zu den in der Datenbank gespeicherten Kennungen gehört, die das oder die Teilnehmergebiete des betreffenden Benutzers definieren. Das Ergebnis wird von dem Server an das mobile Endgerät und von diesem an das SIM-Modul übergeben. Sofern das Ergebnis der Überprüfung positiv ist, d.h. sich das mobile Endgerät in einem Teilnehmergebiet befindet, gibt das SIM-Modul ein Steuersignal an das mobile Endgerät, in dessen Display eine entsprechende Anzeige erfolgt.

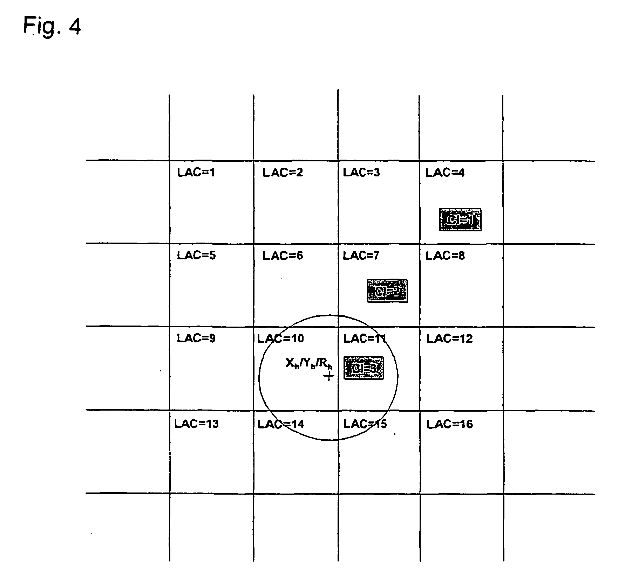

Fig. 4 erläutert das beschriebene Verfahren näher: Das kreisförmige Gebiet ist durch den Mittelpunkt Xh und Yh sowie den Radius Rh eindeutig definiert. Die Location Areas mit den Kennungen LAC 6, 7, 10, 11, 14 und 15 liegen teilweise innerhalb des kreisförmigen Bereichs. Diese Kennungen sind in einem Speicher des SIM-Moduls abgelegt, der in Fig. 3 als LAC/Cl-Range bezeichnet ist. Erhält das SIM-Modul eine LAC-Kennung außerhalb dieses Bereiches (z.B. LAC = 4), erfolgt keine Abfrage an den Server gemäß Fig. 3 und das Verfahren ist beendet. Erhält das SIM-Modul eine LAC-Kennung, die zu der LAC/Cl-Range gehört, erfolgt eine Abfrage des Speichers HZ-Cache. Ist die Kennung dort gespeichert, wird eine Anzeige generiert, dass sich das mobile Endgerät in dem Teilnehmergebiet befindet. Wird beispielsweise die Kennung LAC/Cl = 7/2 erhalten, prüft das SIM-Modul, ob diese Kennung in dem Speicher HZ-Cache abgelegt ist. Trifft dies wie im vorliegenden Fall nicht zu, sendet das SIM-Modul eine Anfrage an den HZI-Server, der mittels der Datenbank HZI-DB prüft, ob die empfangene Kennung innerhalb einer zu einem Teilnehmergebiet gehörenden Liste (HZ- oder CZ LAC/Cl User List) zu finden ist. Das im vorliegenden Beispiel negative Ergebnis wird mittels des mobilen Endgerätes dem SIM-Modul mitgeteilt. Erhält das SIM-Modul die Kennung LAC/Cl = 11/3 erfolgt die Prüfung, ob sich die Kennung in dem Speicher befindet, in dem die Daten LAC/Cl-Range abgespeichert sind. Ist die Kennung LAC = 11 dort gespeichert, erfolgt eine Abfrage des Speichers HZ-Cache. Ist die Kennung LAC/Cl = 11/3 dort gespeichert, wird eine Anzeige generiert, dass sich das mobile Endgerät in dem Teilnehmergebiet befindet. Ist dies nicht der Fall, wird eine Anfrage, an den Server gestartet, wobei der Server in diesem Fall ein positives Ergebnis übermittelt, das an dem Display des mobilen Endgerätes angezeigt wird. Die Kennung LAC/Cl = 11/3 wird sodann in den Speicher HZ-Cache geschrieben.

In bevorzugter Ausgestaltung der Erfindung speichert der auf dem SIM-Modul vorgesehene Speicher (HZ-Cache) nur die Kennungen LAC/Cl eines verhältnismäßig kleinen Teilnehmergebietes, da in diesem Fall noch überschaubare Datenmengen vorliegen. Ein solches Teilnehmergebiet kann beispielsweise ein bestimmter Bereich (Homezone) um den Wohnort des Benutzers sein.

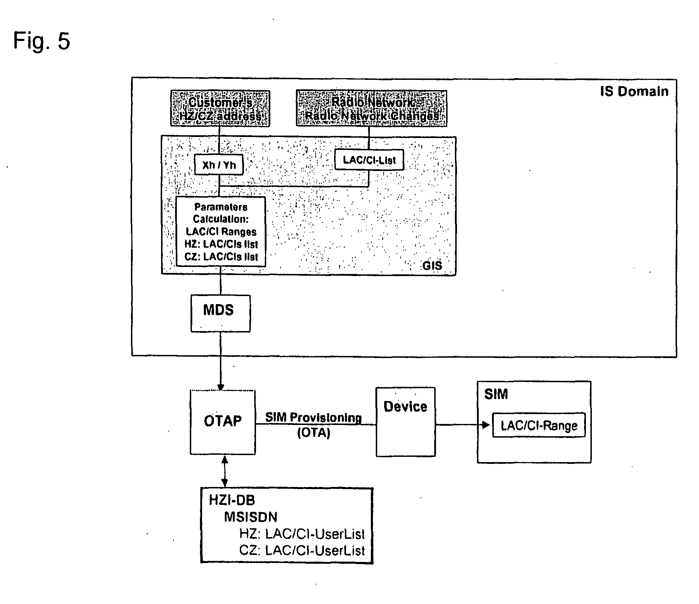

Fig. 5 zeigt die Bestimmung und Übermittlung der Daten LAC/Cl-Range. Aus dem Wohnort des Benutzers bzw. den Koordinaten Xh und Yh und der Größe des Teilnehmergebietes wird die Datei LAC/Cl-Range mit den Kennungen der Location Areas und/oder Funkzellen ermittelt, die Berührungspunkte mit dem Teilnehmergebiet haben. Desweiteren wird für jeden Teilnehmerbereich CZ, HZ eine Datei (HZ- und CZ LAC/Cl-List) mit Kennungen der Location Areas und/oder Funkzellen ermittelt, die innerhalb der Teilnehmergebiete CZ, HZ liegen. Diese Datei wird auf der Datenbank HZI-DB abgelegt und steht für eine Abfrage seitens des Servers zur Verfügung.

Anders als die Daten des HZ-Cache, die in bevorzugter Ausgestaltung der Erfindung im Laufe des Betriebes auf dem SIM-Modul gespeichert werden, werden die Daten LAC/Cl-Range bei Freischaltung auf das SIM-Modul geschrieben und dort gespeichert. Die Kennungen LAC/Cl können derart ausgeführt sein, dass sie eindeutige Rückschlüsse auf die geographische Position der Location Area oder Funkzelle zulassen.

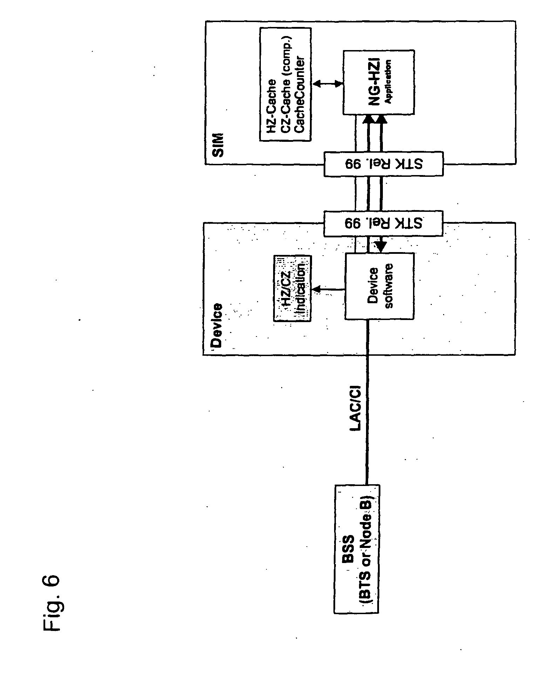

Fig. 6 zeigt eine weitere Ausführungsform der vorliegenden Erfindung. Ein Kommunikationssystem dieser Ausgestaltung kommt ebenfalls ohne die Übermittlung der Koordinaten der Location Area oder Funkzelle aus, in der sich das mobile Endgerät befindet. Seitens der Sende- und Empfangseinheit BSS wird lediglich die Kennung LAC/Cl der Location Area und/oder Funkzelle übermittelt, in der sich das mobile Endgerät befindet. Diese wird von dem mobilen Endgerät an das SIM-Modul übergeben und hier mit einer Liste von Kennungen der Location Areas und/oder Funkzellen verglichen, die in Speichern (HZ-Cache, CZ-Cache) des SIM-Moduls abgelegt sind. Im Falle der Übereinstimmung wird aufgrund eines entsprechendes Steuersignals von dem SIM-Modul an das mobile Endgerät in dessen Display angezeigt, dass sich das mobile Endgerät innerhalb eines Teilnehmergebietes befindet. Dabei ist nach dem in Fig. 6 gezeigten Ausführungsbeispiel vorgesehen, dass Listen für die unterschiedlichen Teilnehmergebiete CZ und HZ vorgesehen sind, so dass im Display die Zugehörigkeit zu dem entsprechenden Teilnehmergebiet angezeigt wird. In dem Speicher HZ-Cache sind die Kennungen aller Location Areas und/oder Funkzellen abgelegt, die zu der Homezone HZ gehören. In dem Speicher CZ-Cache sind die Kennungen aller Location Areas und/oder Funkzellen abgelegt, die zu der im allgemeinen größeren Cityzone CZ gehören.

Ist die empfangene Kennung nicht Bestandteil der gespeicherten Kennungen, unterbleibt eine entsprechende Anzeige.

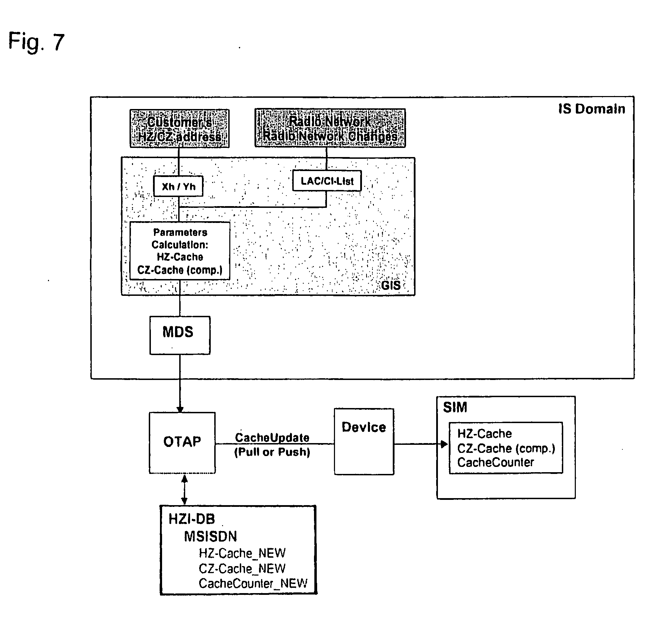

Fig. 7 verdeutlicht die Ermittlung und Übersendung der Kennungen der Location Areas und/oder Funkzellen, die den entsprechenden Teilnehmergebieten angehören, an das mobile Endgerät. Diese werden aufgrund der Adresse Xh, Yh, die beispielsweise dem Wohnort des Teilnehmers entspricht aber auch jede andere beliebige Adresse sein kann, und der Größe des Teilnehmergebietes ermittelt, die von dem Radius eines Kreises um den Mittelpunkt Xh, Yh bzw. von den Stadtgrenzen abhängen kann, und dann über die Luftschnittstelle OTAP an das mobile Endgerät und von diesem an das SIM-Modul übergeben, in dem sie gespeichert werden.

Es kann vorgesehen sein, dass bei einem Wohnortwechsel oder bei Änderungen des Kommunikationsnetzes, eine Neuerstellung der gespeicherten Dateien erforderlich wird. Dabei kann die Datei mit den neuen Kennungen unmittelbar an das SIM-Modul via OTAP übersandt werden. Alternativ dazu kann vorgesehen sein, dass die Datei (HZ-, CZ Cache NEW) zunächst in einer Datenbank (HZI-DB) abgelegt wird und zu einem bestimmten Zeitpunkt von dem SIM-Modul angefordert wird. Stimmen die auf dem SIM-Modul gespeicherten Daten mit dem in der Datenbank abgelegten nicht überein, werden die Dateien der Datenbank via OTAP an das SIM-Modul übersendet.

Problematisch ist im Falle größerer Teilnehmergebiete, wie beispielsweise einer Cityzone einer Großstadt, die Menge an Kennungen, die in dem Cache zu speichern sind. Die Cityzone einer Großstadt kann beispielsweise 600 Zellen umfassen. Homezones umfassen dagegen üblicherweise ca. 20 Zellen, so dass die Speicherung von deren Kennungen beispielsweise auf dem SIM-Modul weniger problematisch ist. Um das Problem der Speicherung großer Datenmengen zu beheben kann vorgesehen sein, die Datenmenge durch eine den Speicherbedarf verringernde Art der Speicherung zumindest eines Teils der abzuspeichernden Daten zu verringern. Mögliche Kompressionsverfahren sind beispielsweise ZIP oder RAR.

In einer Ausführungsform kann zur Verringerung des Speicherbedarfs vorgesehen sein, dass geprüft wird, welche Location Areas vollständig innerhalb eines Teilnehmergebietes, beispielsweise einer Cityzone liegen. Für diese Location Areas ist es ausreichend nur die Kennungen LAC abzuspeichern, da die Speicherung der Zellkennungen Cl nicht erforderlich ist. Für Location Areas, von denen die Mehrzahl der Zellen innerhalb eines Teilnehmergebietes liegen, werden nur die Kennungen LAC/Cl von den Funkzellen gespeichert, die außerhalb des Teilnehmergebietes liegen, da deren Anzahl geringer ist. Wird beim Vergleich mit einer empfangenen Kennung festgestellt, dass die empfangene Kennung unter den gespeicherten Kennungen ist, steht fest, dass sich das mobile Endgerät nicht in dem Teilnehmergebiet befindet. Bei Location Areas, von denen die Mehrzahl der Zellen außerhalb eines Teilnehmergebietes liegen, werden nur die Kennungen LAC/Cl der Zellen gespeichert, die sich innerhalb des Teilnehmergebietes befinden.

Für eine Cityzone der Stadt Berlin lässt sich auf diese Weise eine Kompression der zu speichernden Datenmenge um den Faktor 30 erzielen.

Alternativ wäre eine Konfiguration der Teilnehmergebiete und Location Areas dergestalt möglich, dass die Grenzen der Location Areas genau mit den Grenzen des Teilnehmergebietes übereinstimmen, so dass ein Teilnehmergebiet vollständig und eindeutig durch die Angabe der Location Areas definiert wird, d.h. nur die Kennung LAC gespeichert werden muß.

Sofern die Kennungen aller Funkzellen eine Seriennummer aufweisen, ist es möglich nur die Seriennummer oder die Cl einer in dem Teilnehmergebiet befindlichen Funkzelle zu speichern. Weist eine empfangene Cl eine andere Seriennummer auf, wird anhand der Abweichung zwischen beiden Seriennummern festgestellt, ob die Zelle zu dem betreffenden Teilnehmergebiet gehört.

Sofern die Kennungen der Funkzellen eines Teilnehmergebietes in einem bestimmten Bereich liegen, ist es möglich, nicht alle Kennungen dieses Bereichs, sondern nur die Bereichsgrenzen zu speichern. Fällt die empfangene Kennung einer Funkzelle nicht in diesen Bereich, wird festgestellt, dass sich das mobile Endgerät nicht in dem Teilnehmergebiet befindet. Dabei ist es unschädlich, wenn der gespeicherte Bereich Kennungen umfasst, die nicht existieren, da es allein darauf ankommt, ob alle existierenden Kennungen von Funkzellen eines Teilnehmergebietes von dem gespeicherten Bereich umfasst sind.

Die meisten Sende- und Empfangsstation bedienen nicht nur eine, sondern drei Funkzellen. Diese werden auch als Sektoren bezeichnet. Üblicherweise wird jedem Sektor, d.h. jeder Funkzelle eine eindeutige LAC/Cl zugeordnet. Da in den meisten Fällen alle Sektoren einer Sende- und Empfangseinheit in demselben Teilnehmergebiet angeordnet sind, kann es ausreichend sein, nur die LAC/Cl eines Sektors, d.h. einer Funkzelle zu speichern, wenn sichergestellt ist, dass die zwei weiteren Sektoren sich aus dem gespeicherten Wert herleiten lassen. Dies kann z.B. dadurch realisiert werden, dass der erste Wert der Kennung für die zwei weiteren Sektoren um jeweils den Wert 2 erhöht wird, während die weiteren Zahlen der Kennung dieselben sind. Denkbar wäre somit z.B. eine Kennung der drei Sektoren einer Sende- und Empfangsstation nach dem Muster 0xxxx, 2xxxx, 4xxxx oder 1 xxxx, 3xxxx, 5xxxx. In beiden Fällen genügt die Speicherung der Kennung nur eines Sektors der Sende- und Empfangsstation, da sich die beiden anderen Kennungen durch Addition oder Subtraktion des Wertes 2 ergeben.

Eine weitere Möglichkeit der Reduktion der zu speichernden Datenmenge ergibt sich, wenn die Teilnehmergebiete mit einem Koordinatensystem versehen werden. Sind die empfangenen Kennungen Cl der Funkzellen derart kodiert, dass sich aus Cl die Koordinaten berechnen lassen, kann aufgrund dieser Bestimmung ermittelt werden, ob die Funkzelle innerhalb des Teilnehmergebietes liegt. Gespeichert werden muß ausschließlich die Kennung LAC der Location Areas, die sich in oder im Bereich des Teilnehmergebietes befinden, sowie die Größe des Teilnehmergebietes.

Weiterhin kann vorgesehen sein, dass auf dem SIM-Modul oder einer anderen Speichereinheit die Kennungen LAC der Location Areas gespeichert werden, die vollständig oder teilweise innerhalb eines Teilnehmergebietes liegen. Stimmt eine empfangene LAC nicht mit einer gespeicherten Kennung LAC überein, wird festgestellt, dass sich das mobile Endgerät nicht in dem Teilnehmergebiet befindet. Für den Fall der Übereinstimmung, wird anhand der empfangenen Kennung Cl der Funkzelle ermittelt, in welchem Teilnehmergebiet sich die Funkzelle befindet. Die empfangene Kennung Cl ist derart kodiert, dass sich aus dieser entnehmen lässt, in welchem Teilnehmergebiet der Location Area sich die Zelle befindet. Ist das daraus ermittelbare Teilnehmergebiet nicht das auf dem SIM-Modul gespeicherte, wird festgestellt, dass sich das mobile Endgerät nicht in dem Teilnehmergebiet befindet.

Eine weitere Möglichkeit der Verringerung der zu speichernden Datenmenge kann dadurch erzielt werden, dass die Funkzellen einer Location Area eine Kennung erhalten, die ihre Lage relativ zueinander in der Location Area eindeutig kennzeichnet. Beispielsweise kann vorgesehen sein, die Location Area mit einem Koordinatensystem X, Y zu versehen. Die Werte X und Y können Werte zwischen 0 und 255 annehmen. Eine Funkzelle mit den Koordinaten X=170 und Y=10 wäre entsprechend um 170 Zähler von Koordinatenursprung in Abszissenrichtung und 10 Zähler vom Koordinatenursprung in Ordinatenrichtung entfernt. Bei dieser Ausführungsform der Erfindung werden auf dem SIM-Modul oder in einer anderen Speichereinheit die Kennungen der Zellen abgelegt, die sich innerhalb derselben Location Area und innerhalb desselben Teilnehmergebietes befinden. Für die Bestimmung der Zugehörigkeit zu dem Teilnehmergebiet werden jeweils wenigstens zwei Kennungen von Zellen ausgewählt, die sich sowohl in ihrer X- als auch in ihrer Y-Koordinate unterscheiden. Damit lässt sich ein Quadrat oder Rechteck bilden, von dem zwei Eckpunkte von dem bekannten Koordinaten der Zellen gebildet werden. Wird sodann eine Kennung Cl empfangen wird geprüft, ob die zugehörige Zelle innerhalb des Rechteckes liegt. Ist dies der Fall, wird festgestellt, dass sich das mobile Endgerät innerhalb des Teilnehmergebietes befindet.

Grundsätzlich kann die Prüfung der Zugehörigkeit zu einem Teilnehmergebiet sowie die Speicherung von Daten auf dem SIM-Modul und/oder auf einer Ermittlungseinheit erfolgen, auf die mittels Fernabfrage zugegriffen werden kann.

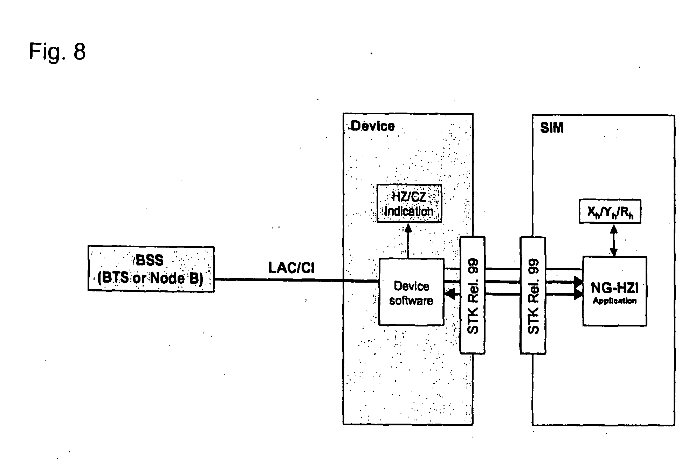

Fig. 8 zeigt den Aufbau des erfindungsgemäßen Kommunikationssystems in einer weiteren Ausführungsform mit auf dem SIM-Modul gespeicherter Applikation zur Bestimmung der Zugehörigkeit zu einem Teilnehmergebiet sowie mit einer Applikation zur Ermittlung von Koordinaten aus Kennungen der Funkzellen.

Auch diese Ausführungsform der Erfindung setzt nicht voraus, dass seitens der Sende- und Empfangsantennen die Koordinaten der Funkzelle übersandt werden. Wie aus Fig. 8 ersichtlich wird seitens der Sende- und Empfangsantenne die Kennung LAC/Cl übermittelt. Diese wird von dem mobilen Endgerät empfangen und an das SIM-Modul weitergereicht. Die Kennung LAC/Cl ist derart kodiert, dass daraus die Koordinaten X, Y der Funkzelle ermittelt werden können. Dazu ist das Gesamtgebiet vorzugsweise in ein Raster bestimmter Größe unterteilt, in dem jedem Rasterfeld eine eigene Kennung LAC/Cl zugeordnet ist, aus der sich die Lage, d.h. die Koordinaten des Rasterfeldes ermitteln lassen.

Die auf diese Weise seitens des SIM-Moduls bestimmten Koordinaten X, Y können nun auf ihre Zugehörigkeit zu einem oder mehreren Bereichen geprüft werden, die durch einen Ortspunkt Xh, Yh und den Radius Rh eines den Ortspunkt als Mittelpunkt umgebenden Kreises definiert sind.

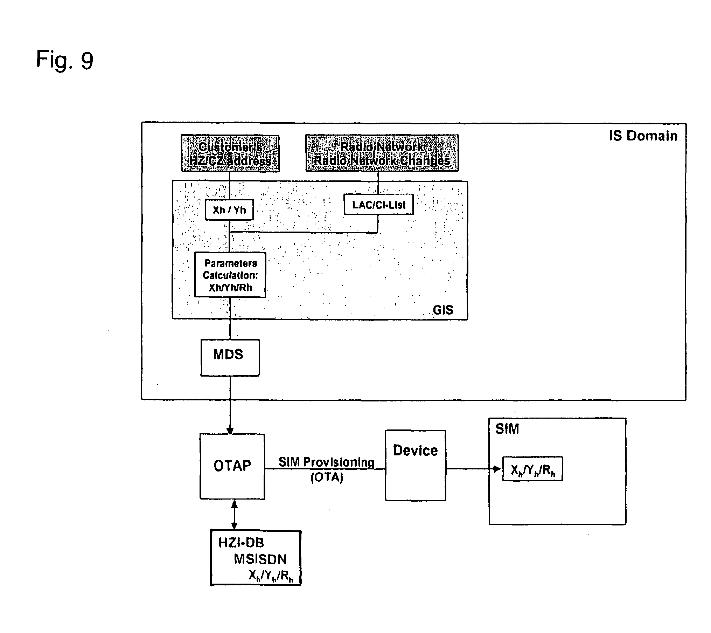

Fig. 9 zeigt den Verfahrensablauf zur Bestimmung und Speicherung von Koordinaten auf dem SIM-Modul. Aufgrund der von dem Benutzer angegebenen Adresse werden die Mittelpunktskoordinaten Xh, Yh ermittelt und gemeinsam mit dem Radius Rh mittels der Luftschnittstelle OTAP an das mobile Endgerät und von diesem an das SIM-Modul übergeben, in dem sie gespeichert werden.

Das beschriebene Kommunikationssystem und Verfahren kann mit dem GSM-Standard sowie mit jedem beliebigen anderen Kommunikationsstandard, wie beispielsweise UMTS eingesetzt werden.

## Patentansprüche

1. Kommunikationssystem für den Mobilfunk mit mobilen Endgeräten, mit in die mobilen Endgeräte einsetzbaren Modulen (SIM), wobei innerhalb des durch das Kommunikationssystems abgedeckten Gesamtgebietes wenigstens ein Teilnehmergebiet (HZ; CZ) festgelegt ist, innerhalb dessen die Kommunikation von und/oder zu den mobilen Endgeräten unter besonderen Bedingungen erfolgt, sowie mit Mitteln, durch die feststellbar ist, ob sich das mobile Endgerät innerhalb des Teilnehmergebietes (HZ; CZ) befindet,
**dadurch gekennzeichnet,**
**dass** die Mittel auf dem Modul (SIM) oder in einer Ermittlungseinheit angeordnet sind, auf die mittels Fernabfrage zugreifbar ist.

2. Kommunikationssystem nach Anspruch 1, **dadurch gekennzeichnet, dass** das Modul (SIM) das Subscriber-Identification-Module ist.

3. Kommunikationssystem nach Anspruch 1 oder 2, **dadurch gekennzeichnet, dass** in dem von dem Kommunikationssystem abgedeckten Gesamtgebiet Location Areas angeordnet sind, in denen sich eine oder mehrere Funkzellen befinden.

4. Kommunikationssystem nach Anspruch 3, **dadurch gekennzeichnet, dass** Location Areas und/oder die Funkzellen diese charakterisierende ldentitätsdaten aufweisen.

5. Kommunikationssystem nach Anspruch 4, **dadurch gekennzeichnet, dass** die Identitätsdaten Kennungen (LAC/CI) und Koordinaten (X, Y) umfassen.

6. Kommunikationssystem nach Anspruch 4 oder 5, **dadurch gekennzeichnet, dass** in dem Kommunikationssystem Mittel vorgesehen sind, mittels derer die ldentitätsdaten der Location Areas und/oder der Funkzellen an die mobilen Endgeräte übermittelbar sind.

7. Kommunikationssystem nach einem der vorhergehenden Ansprüche, **dadurch gekennzeichnet, dass** in den mobilen Endgeräten eine Schnittstelle vorgesehen ist, mittels derer die Identitätsdaten an das Modul (SIM) übermittelt werden, und/oder, dass in dem Modul (SIM) und/oder in der Ermittlungseinheit des Kommunikationssystems Mittel vorgesehen sind, mittels derer die Identitätsdaten der Location Area oder Funkzelle, in der sich das mobile Endgerät befindet, mit das Teilnehmergebiet (HZ; CZ) charakterisierenden Daten verglichen werden.

8. Kommunikationssystem nach Anspruch 7, **dadurch gekennzeichnet, dass** die das Teilnehmergebiet (HZ; CZ) charakterisierenden Daten Kennungen (LAC/Cl) und Koordinaten (X, Y) der in dem Teilnehmergebiet befindlichen Location Areas und/oder Funkzellen umfassen, und/oder, dass die das Teilnehmergebiet (HZ; CZ) charakterisierenden Daten in dem Modul (SIM) und/oder in der Ermittlungseinheit abgelegt sind.

9. Kommunikationssystem nach einem der vorhergehenden Ansprüche, **dadurch gekennzeichnet, dass** die Mittel, durch die feststellbar ist, ob sich das mobile Endgerät innerhalb des Teilnehmergebietes (HZ; CZ) befindet derart ausgeführt sind, dass durch diese bestimmbar ist, ob die Koordinaten einer Location Area oder Funkzelle des Kommunikationssystems in einem Bereich liegen, der durch einen Ortspunkt (Xh, Yh) und den Radius (Rh) eines den Ortspunkt (Xh, Yh) als Mittelpunkt umgebenden Kreises festgelegt ist.

10. Kommunikationssystem nach Anspruch 9, **dadurch gekennzeichnet, dass** die Koordinaten des Ortspunktes (Xh, Yh) sowie der Radius (Rh) in dem Modul (SIM) oder in der Ermittlungseinheit abgelegt sind.

11. Kommunikationssystem nach Anspruch 9 oder 10, **dadurch gekennzeichnet, dass** die Kennungen der Location Areas (LAC) und/oder Funkzellen (CI) derart bezeichnet sind, dass sie in eindeutiger Beziehung zu den Koordinaten der Location Area und/oder der Funkzelle stehen, so dass aus den Kennungen (LCA/Cl) die Koordinaten ermittelbar sind.

12. Kommunikationssystem nach Anspruch 11, **dadurch gekennzeichnet, dass** in dem Modul (SIM) oder in der Ermittlungseinheit Mittel vorgesehen sind, durch die die Koordinaten aufgrund der Kennungen (LAC/Cl) bestimmbar sind.

13. Kommunikationssystem nach einem der vorhergehenden Ansprüche, **dadurch gekennzeichnet, dass** das Modul und/oder die Ermittlungseinheit Mittel aufweist, durch die bestimmbar ist, ob die Kennung einer Location Area (LAC) und/oder Funkzelle (CI) mit einer vorgegebenen Kennung der Location Area und/oder Funkzelle des Teilnehmergebietes (HZ; CZ) übereinstimmt.

14. Kommunikationssystem nach Anspruch 13, **dadurch gekennzeichnet, dass** die vorgegebene Kennung in dem Modul (SIM) oder in der Ermittlungseinheit abgelegt ist.

15. Kommunikationssystem nach Anspruch 14, **dadurch gekennzeichnet, dass** die in dem Modul (SIM) oder in der Ermittlungseinheit abgelegten Kennungen (LAC/Cl) zumindest teilweise in einer den Speicherbedarf verringernden Form abgespeichert sind.

16. Kommunikationssystem nach einem der vorhergehenden Ansprüche, **dadurch gekennzeichnet, dass** die Ermittlungseinheit eine Sende- und Empfangseinheit aufweist, wobei die Sendeeinheit zum Empfang einer Abfrage der Zugehörigkeit zu einem Teilnehmergebiet (HZ; CZ) dient und die Sendeeinheit zur Übermittlung des Ergebnisses der Prüfung dient, ob sich das mobile Endgerät (Device) in einem Teilnehmergebiet (HZ; CZ) befindet.

17. Kommunikationssystem nach einem der vorhergehenden Ansprüche, **dadurch gekennzeichnet, dass** eine Schnittstelle zwischen mobilem Endgerät und dem Modul (SIM) vorgesehen ist, über die von dem Modul (SIM) an das mobile Endgerät (Device) in Form eines Steuersignals die Information übermittelbar ist, ob sich das mobile Endgerät in einem Teilnehmergebiet (HZ; CZ) befindet.

18. Verfahren zum Betreiben eines Kommunikationssystems für den Mobilfunk mit mobilen Endgeräten sowie mit in die mobilen Endgeräte einsetzbaren Modulen (SIM), wobei innerhalb des durch das Kommunikationssystems abgedeckten Gesamtgebietes wenigstens ein Teilnehmergebiet (HZ; CZ) festgelegt ist, innerhalb dessen die Kommunikation von und/oder zu den mobilen Endgeräten unter besonderen Bedingungen erfolgt, und wobei eine Ermittlung erfolgt, ob sich das mobile Endgerät in dem Teilnehmergebiet (HZ; CZ) befindet,
**dadurch gekennzeichnet,**
**dass** die Ermittlung durch das Modul (SIM) oder durch eine Ermittlungseinheit erfolgt, auf die mittels Fernabfrage zugegriffen wird.

19. Verfahren nach Anspruch 18, **dadurch gekennzeichnet, dass** mittels des Moduls (SIM) und/oder der Erfassungseinheit die Prüfung erfolgt, ob die Koordinaten einer Location Area und/oder Funkzelle in einem Bereich liegen, der durch einen Ortspunkt (Xh, Yh) und den Radius (Rh) eines den Ortspunkt als Mittelpunkt umgebenden Kreises festgelegt ist, und/oder, dass mittels des Moduls und/oder der Erfassungseinheit eine Prüfung erfolgt, ob die Kennung einer Location Area (LAC) oder Funkzelle (CI) mit einer vorgegebenen Kennung einer Location Area oder Funkzelle übereinstimmt.

20. Verfahren nach Anspruch 19, **dadurch gekennzeichnet, dass** die mittels des Moduls und/oder der Erfassungseinheit erfolgende Prüfung, ob die Kennung einer Location Area (LAC) oder Funkzelle (CI) mit einer vorgegebenen Kennung einer Location Area oder Funkzelle übereinstimmt, vor der mittels des Moduls (SIM) und/oder der Erfassungseinheit erfolgenden Prüfung erfolgt, ob die Koordination einer Location Area (LAC) und/oder Funkzelle (CI) in einem Bereich liegen, der durch einen Ortspunkt (Xh, Yh) und den Radius (Rh) eines den Ortspunkt (Xh, Yh) als Mittelpunkt umgebenden Kreises festgelegt ist.

21. Verfahren nach einem der vorhergehenden Verfahrens- Ansprüche, **dadurch gekennzeichnet, dass** anhand der Kennung der Location Areas (LAC) und/oder Funkzellen (CI) deren Koordinaten ermittelt werden und diese Koordinaten dem Verfahren gemäß Anspruch 19 zugrundegelegt werden.

22. Verfahren nach einem der vorhergehenden Verfahrens- Ansprüche, **dadurch gekennzeichnet, dass** die Kennung der Location Area (LAC) und/oder der Funkzelle (CI) und/oder deren Koordinaten von einer Sende- und Empfangsstation an das mobile Endgerät (Device) und von diesem an das Modul (SIM) weitergeleitet werden.

23. Verfahren nach Anspruch 22, **dadurch gekennzeichnet, dass** die von dem mobilen Endgerät an das Modul (SIM) weitergeleiteten Daten von diesem an die Ermittlungseinheit übermittelt werden und dass die Ermittlungseinheit nach Prüfung, ob sich das mobile Endgerät in einem Teilnehmergebiet (HZ; CZ) befindet, das Ergebnis an das mobile Endgerät und dieses an das Modul (SIM) weiterleitet.

## Claims

1. Communication system for mobile radio with mobile terminals, with modules (SIM) which can be inserted into the mobile terminals, wherein at least one subscriber zone (HZ; CZ) is specified within the total area covered by the communication system, within which zone the communication from and/or to the mobile terminals takes place under special conditions, and with means by means of which it can be established whether the mobile terminal is located within the subscriber zone (HZ; CZ),
**characterized in that**
the means are arranged in the module (SIM) or in a locating unit which can be accessed by means of remote enquiry.

2. Communication system according to Claim 1, **characterized in that** the module (SIM) is the subscriber identification module.

3. Communication system according to Claim 1 or 2, **characterized in that** in the total area covered by the communication system, location areas are arranged in which one or more radio cells are located.

4. Communication system according to Claim 3, **characterized in that** location areas and/or the radio cells have these characterizing identity data.

5. Communication system according to Claim 4, **characterized in that** the identity data comprise identifiers (LAC/CI) and coordinates (X, Y).

6. Communication system according to Claim 4 or 5, **characterized in that** in the communication system, means are provided by means of which the identity data of the location areas and/or of the radio cells can be conveyed to the mobile terminals.

7. Communication system according to one of the preceding claims, **characterized in that** in the mobile terminals, an interface is provided by means of which the identity data are conveyed to the module (SIM) and/or that in the module (SIM) and/or in the locating unit of the communication system, means are provided by means of which the identity data of the location area or radio cell in which the mobile terminal is located are compared with the data characterizing the subscriber zone (Hz; CZ).

8. Communication system according to Claim 7, **characterized in that** the data characterizing the subscriber zone (HZ; CZ) comprise identifiers (LAC/CI) and coordinates (X, Y) of the location areas and/or radio cells located in the subscriber zone and/or that the data characterizing the subscriber zone (HZ; CZ) are stored in the module (SIM) and/or in the locating unit.

9. Communication system according to one of the preceding claims, **characterized in that** the means, by means of which it can be established whether the mobile terminal is located within the subscriber zone (HZ; CZ), are arranged in such a manner that they can be used to determine whether the coordinates of a location area or radio cell of the communication system lie within an area which is defined by a local point (Xh, Yh) and the radius (Rh) of a circle surrounding the local point (Xh, Yh) as centre point.

10. Communication system according to Claim 9, **characterized in that** the coordinates of the local point (Xh, Yh) and the radius (Rh) are stored in the module (SIM) or in the locating unit.

11. Communication system according to Claim 9 or 10, **characterized in that** the identifiers of the location areas (LAC) and/or radio cells (CI) are designated in such a manner that they have an unambiguous relation to the coordinates of the location area and/or of the radio cell so that the coordinates can be determined from the identifiers (LCA/CI).

12. Communication system according to Claim 11, **characterized in that** in the module (SIM) or in the locating unit, means are provided by means of which the coordinates can be determined on the basis of the identifiers (LAC/CI).

13. Communication system according to one of the preceding claims, **characterized in that** the module and/or the locating unit has means by means of which it can be determined whether the identifier of a location area (LAC) and/or radio cell (CI) matches a predetermined identifier of the location area and/or radio cell of the subscriber zone (HZ; CZ).

14. Communication system according to Claim 13, **characterized in that** the predetermined identifier is stored in the module (SIM) or in the locating unit.

15. Communication system according to Claim 14, **characterized in that** the identifiers (LAC/CI) stored in the module (SIM) or in the locating unit are stored at least partially in a form reducing the required memory.

16. Communication system according to one of the preceding claims, **characterized in that** the locating unit has a transmitting and receiving unit, the transmitting unit being used for receiving an enquiry of the affiliation with a subscriber zone (HZ; CZ) and the transmitting unit being used for conveying the result of the test of whether the mobile terminal (device) is located in a subscriber zone (HZ; CZ).

17. Communication system according to one of the preceding claims, **characterized in that** an interface between the mobile terminal and the module (SIM) is provided via which information about whether the mobile terminal is located in a subscriber zone (HZ; CZ) can be conveyed in the form of a control signal from the module (SIM) to the mobile terminal (device).

18. Method for operating a communication system for mobile radio with mobile terminals and modules (SIM) which can be inserted into the mobile terminals, wherein at least one subscriber zone (HZ; CZ) is specified within the total area covered by the communication system, within which zone the communication from and/or to the mobile terminals takes place under special conditions, and wherein a determination is effected concerning whether the mobile terminal is located in the subscriber zone (HZ; CZ),
**characterized in that**
the determination is made by the module (SIM) or by means of a locating unit which is accessed by means of remote enquiry.

19. Method according to Claim 18, **characterized in that** the test of whether the coordinates of a location area and/or radio cell are located within an area which is defined by a local point (Xh, Yh) and the radius (Rh) of a circle surrounding the local point as centre point is made by means of the module (SIM) and/or the locating unit, and/or that, by means of the module and/or the locating unit, a test is made concerning whether the identifier of a location area (LAC) or radio cell (CI) matches a predetermined identifier of a location area or radio cell.

20. Method according to Claim 19, **characterized in that** the test, made by means of the module and/or the locating unit, of whether the identifier of a location area (LAC) or radio cell (CI) matches a predetermined identifier of a location area or radio cell is made before the test, made by means of the module (SIM) and/or the locating unit, of whether the coordinates of a location area (LAC) and/or radio cell (CI) are located within an area which is defined by a local point (Xh, Yh) and the radius (Rh) of a circle surrounding the local point (Xh, Yh) as centre point.

21. Method according to one of the preceding method claims, **characterized in that** by means of the identifier of the location areas (LAC) and/or radio cells (CI), their coordinates are determined and these coordinates are used as a basis for the method according to Claim 19.

22. Method according to one of the preceding method claims, **characterized in that** the identifier of the location area (LAC) and/or of the radio cell (CI) and/or of their coordinates are forwarded from a transmitting and receiving station to the mobile terminal (device) and from this to the module (SIM).

23. Method according to Claim 22; **characterized in that** the data forwarded from the mobile terminal to the module (SIM) are conveyed by the latter to the locating unit and **in that** the locating unit, after testing whether the mobile terminal is located in a subscriber zone (HZ; CZ), forwards the result to the mobile terminal and this forwards it to the module (SIM).

## Revendications

1. Système de communication pour la téléphonie mobile avec des terminaux mobiles, avec des modules (SIM) insérables dans les terminaux mobiles, au moins une zone d'abonné (HZ; CZ) étant définie à l'intérieur de la zone globale couverte par le système de communication, zone à l'intérieur de laquelle la communication s'effectue à partir des terminaux mobiles et/ou vers les terminaux mobiles dans des conditions particulières, et avec des moyens par lesquels on peut déterminer si le terminal mobile se trouve à l'intérieur de la zone d'abonné (HZ; CZ),
**caractérisé en ce que**
les moyens sont disposés sur le module (SIM) ou dans une unité de détermination, à laquelle on peut avoir recours par interrogation à distance.

2. Système de communication selon la revendication 1, **caractérisé en ce que** le module (SIM) est le module d'identification de souscripteur.

3. Système de communication selon la revendication 1 ou 2, **caractérisé en ce que** dans la zone globale couverte par le système de communication sont disposées des "Location Areas", dans lesquelles se trouvent une ou plusieurs cellules radio.

4. Système de communication selon la revendication 3, **caractérisé en ce que** les "Location Areas" et/ou les cellules radio présentent ces données d'identité caractérisantes.

5. Système de communication selon la revendication 4, **caractérisé en ce que** les données d'identité comprennent des codes (LAC/CI) et des coordonnées (X, Y).

6. Système de communication selon 4 ou 5, **caractérisé en ce que** dans le système de communication sont prévus des moyens au moyen desquels les données d'identité des "Location Areas" et/ou des cellules radio peuvent être transmises aux terminaux mobiles.

7. Système de communication selon l'une quelconque des revendications précédentes, **caractérisé en ce qu'**il est prévu dans les terminaux mobiles une interface au moyen de laquelle les données d'identité sont transmises au module (SIM), et/ou **en ce que** dans le module (SIM) et/ou dans l'unité de calcul du système de communication sont prévus des moyens au moyen desquels les données d'identité de la "Location Area" ou de la cellule radio, dans laquelle le terminal mobile se trouve, sont comparées avec les données caractérisant la zone d'abonné (HZ; CZ).

8. Système de communication selon la revendication 7, **caractérisé en ce que** les données caractérisant la zone d'abonné (HZ; CZ) comprennent des codes (LAC/CI) et des coordonnées (X, Y) des "Location Areas" et/ou cellules radio se trouvant dans la zone d'abonné et/ou **en ce que** les données caractérisant la zone d'abonné (HZ; CZ) sont déposées dans le module (SIM) et/ou dans l'unité de détermination.

9. Système de communication selon l'une quelconque des revendications précédentes, **caractérisé en ce que** les moyens, par lesquels on peut constater que le terminal mobile se trouve à l'intérieur de la zone d'abonné (HZ; CZ), sont réalisés de telle sorte que, par ceux-ci, on peut déterminer si les coordonnées d'une "Location Area" ou d'une cellule radio du système de communication se situent dans une zone qui est définie par un point local (Xh, Yh) et le rayon (Rh) d'un cercle entourant le point local (Xh, Yh) comme centre.

10. Système de communication selon la revendication 9, **caractérisé en ce que** les coordonnées du point local (Xh, Yh) ainsi que le rayon (Rh) sont déposés dans le module (SIM) ou dans l'unité de détermination.

11. Système de communication selon la revendication 9 ou 10, **caractérisé en ce que** les codes des "Location Areas" (LAC) et/ou des cellules radio (CI) sont désignés de telle sorte qu'ils sont en rapport évident avec les coordonnées de la "Location Area" et/ou de la cellule radio, de sorte que les coordonnées peuvent être déterminées à partir des codes (LCA/CI).

12. Système de communication selon la revendication 11, **caractérisé en ce que** dans le module (SIM) ou dans l'unité de détermination sont prévus des moyens par lesquels les coordonnées peuvent être déterminées sur la base des codes (LAC/CI).

13. Système de communication selon l'une quelconque des revendications précédentes, **caractérisé en ce que** le module et/ou l'unité de détermination présente des moyens par lesquels on peut déterminer si le code d'une "Location Area" (LAC) et/ou d'une cellule radio (CI) concorde avec un code prédéfini de la "Location Area" et/ou de la cellule radio de la zone d'abonné (HZ; CZ).

14. Système de communication selon la revendication 13, **caractérisé en ce que** le code prédéfini est déposé dans le module (SIM) ou dans l'unité de détermination.

15. Système de communication selon la revendication 14, **caractérisé en ce que** les codes (LAC/CI) déposés dans le module (SIM) ou dans l'unité de détermination sont stockés au moins en partie dans une forme réduisant les besoins en mémoire.

16. Système de communication selon l'une quelconque des revendications précédentes, **caractérisé en ce que** l'unité de détermination présente une unité d'émission et de réception, l'unité d'émission servant à la réception d'une interrogation de l'appartement à une zone d'abonné (HZ; CZ) et l'unité d'émission sert à la transmission du résultat de la vérification pour savoir si le terminal (Device) mobile se trouve dans une zone d'abonné (HZ; CZ).

17. Système de communication selon l'une quelconque des revendications précédentes, **caractérisé en ce qu'**il est prévu une interface entre le terminal mobile et le module (SIM) par laquelle l'information est destinée à savoir si le terminal mobile se trouve dans une zone d'abonné (HZ; CZ) peut être transmise du module (SIM) au terminal (Device) mobile sous la forme d'un signal de commande.

18. Procédé pour l'exploitation d'un système de communication pour la téléphonie mobile avec des terminaux mobiles ainsi qu'avec des modules (SIM) pouvant être insérés dans les terminaux mobiles, au moins une zone d'abonné (HZ; CZ), à l'intérieur de laquelle la communication à partir de terminaux mobiles et/ou vers les terminaux mobiles s'effectue dans des conditions particulières, étant définie à l'intérieur de la zone globale couverte par le système de communication, et une détermination s'effectuant pour savoir si le terminal mobile se trouve dans la zone d'abonné (HZ; CZ),
**caractérisé en ce que**
la détermination s'effectue par le module (SIM) ou par une unité de détermination à laquelle on a recours par une interrogation à distance.

19. Procédé selon la revendication 18, **caractérisé en ce que**, au moyen du module (SIM) et/ou de l'unité d'enregistrement, on effectue le contrôle destiné à savoir si les coordonnées d'une "Location Area" et/ou de la cellule radio se situent dans une zone qui est définie par un point local (Xh, Yh) et le rayon (Rh) d'un cercle entourant le point local comme centre, et/ou **en ce que**, au moyen du module et/ou de l'unité d'enregistrement, on effectue un contrôle pour savoir si le code d'une "Location Area" (LAC) ou d'une cellule radio (CI) concorde avec un code prédéfini d'une "Location Area" ou d'une cellule radio.

20. Procédé selon la revendication 19, **caractérisé en ce que** le contrôle s'effectuant au moyen du module et/ou de l'unité d'enregistrement et destiné à savoir si le code d'une "Location Area" (LAC) ou d'une cellule radio (CI) concorde avec un code prédéfini d'une "Location Area" ou d'une cellule radio intervient avant le contrôle s'effectuant au moyen du module (SIM) et/ou de l'unité d'enregistrement pour savoir si la coordination d'une "Location Area" (LAC) et/ou d'une cellule radio (CI) se situe dans une zone qui est fixée par un point local (Xh, Yh) et le rayon (Rh) d'un cercle entourant le point local (Xh, Yh) comme centre.

21. Procédé selon l'une quelconque des revendications de procédé précédentes, **caractérisé en ce que**, à l'aide du code des "Location Areas" (LAC) et/ou des cellules radio (CI), on détermine leurs coordonnées et ces coordonnées sont prises pour base pour le procédé selon la revendication 19.

22. Procédé selon l'une quelconque des revendications de procédé précédentes, **caractérisé en ce que** le code de la "Location Area" (LAC) et/ou de la cellule radio (CI) et/ou leurs coordonnées sont transmises par une station d'émission et de réception au terminal (Device) mobile et de celui-ci ou au module (SIM).

23. Procédé selon la revendication 22, **caractérisé en ce que** les données transmises du terminal mobile au module (SIM) sont transmises de celui-ci à l'unité de détermination et **en ce que**, après le contrôle destiné à savoir si le terminal mobile se trouve dans une zone d'abonné (HZ; CZ), l'unité de détermination transfère le résultat au terminal mobile et celui-ci au module (SIM).
